# EUROPEAN PATENT SPECIFICATION

(11) **EP 1 109 620 B1**
(45) Date of publication and mention of the grant of the patent: **19.03.2003**
(21) Application number: 99938090.0
(22) Date of filing: 13.08.1999
(51) Int. Cl.: B01J 8/24, B01J 8/18

(54) **GASEOUS FLUIDIZATION AIDS**
GASARTIGE HILFSMITTEL ZUR BILDUNG EINER WIRBELSCHICHT
SYSTEME GAZEUX D'AIDE A LA FLUIDISATION

(30) Priority: 13.08.1998 US 133215
(43) Date of publication of application: 27.06.2001
(73) Proprietor: The University of Western Ontario, London, Ontario N6A 5B8 (CA)
(72) Inventor: ZHU, Jingxu, London, Ontario N6G 4W8 (CA); GRACE, John, R., Vancouver, Bitish Columbia V6T 1Z4 (CA); JIAO, Shi-Yun-Yunnan Polytechnic University, Kunming (CN)
(74) Representative: McLean, Robert Andreas
(86) International application number: PCT/CA99/00742
(87) International publication number: WO 00/009254

(56) References cited:
- EP-A- 0 476 207
- EP-A- 0 784 056
- US-A- 5 277 245

## Description

### TECHNICAL FIELD

This invention relates to fluidization of particles, and particularly to fluidization aids.

Gas-solids fluidization is a process where gas flows through a bed of solid particles at a sufficient velocity that the particles begin to move and form a gas-solids suspension with properties like a liquid (hence the term "fluidized"). The advantages of these liquid-like properties are then employed to handle the particles and to carry out gas-solids chemical reactions, gas-phase solid-catalyzed chemical reactions or physical operations such as drying or coating.

In some applications, particularly with particles larger than approximately 30-40 µm in diameter, fluidizing gas is all that is required, although fluidization aids are sometimes useful or essential. In other applications, fluidizing gas alone is not effective, particularly with powders having fine particles commonly referred to as Geldart Group C particles (mostly smaller than 30 µm), and to a lesser degree with powders having fine Geldart Group A particles (which are generally slightly larger than the Group C particles). These fine particles tend to be very cohesive, i.e. they clump together or agglomerate, and they are therefore very difficult to fluidize.

The reason for the difficulties in fluidizing Group C fine powders and to a lesser extent Group A fine powders is that there are relatively large inter-particle forces between fine particles, which reach or exceed the magnitude of the weight-minus-bouyancy force which must be overcome to fluidize the particles.

There is therefore a need for fluidization aids in some applications, particularly for Group C powders and to a lesser extent for Group A powders, but in other cases as well.

### BACKGROUND ART

To obtain better fluidization, it is known to use fluidization aids, in addition to the fluidizing gas. Such aids include the addition of other powders such as anti-static aids or hydrophobic silica, mechanical means such as stirring, agitation or vibration of the bed, acoustic (including ultrasonic) waves, electromagnetic forces, etc.. These aids help to overcome the inter-particle forces and produce better fluidization than is possible with the fluidizing gas alone.

In the prior art, such as in United States patent no. 3,639,103 (Sheely) for example, inert gases including helium have been used as fluidizing gases, so that they would not participate in a chemical reaction. However, the prior art teaches that, particularly when it comes to fine powders, fluidization aids are required regardless of what the fluidizing gas is.

U.S. patent No. 5,277,245 (Dutta et al.) uses a fluidizing gas comprising helium, hydrogen and mixtures thereof, optionally in combination with other fluidizing gases, to enhance the heat transfer characteristics of fluidized beds of Geldart type C powders. However, Dutta et al. blends the powder with a fine particle size hydrophobic silica, which functions as a fluidization aid.

United States patent No. 5,258,201 (Munn et al.) discloses a method for forming a protective coating on phosphor particles used in the manufacture of fluorescent lamps. One step in the process comprises the suspension of phosphor particles in a fluidized bed. An inert gas, helium being one example, is passed upwardly through the fluidized bed. However, for fluidizing fine particles, a small amount of a fluidization aid is mixed with the phosphor powder, or it is stated that "fluidization of fine phosphor powders can alternatively be accomplished by additional agitation of the phosphor powder particles...".

Three other United States patents, nos. 4,585,673; 4,710,674 and 4,825,124 (all Sigai), are very similar, and also contain similar statements regarding the need to add fluidization aids when fluidizing fine powders.

United States patent no. 5,783,721 (Tsumura et al.) relates to a process for the preparation of alkylhalosilanes by reacting fluidized particles of metallic silicon powder with a gaseous alkyl halide in the presence of a copper catalyst (also in the form of fluidized particles) in a fluidized bed reactor. Difficulties in fluidizing Geldart type C powders are discussed. These difficulties are overcome by carefully controlling the size distribution of the particles to ensure that there are sufficient larger-sized particles to act as fluidization aids for the smaller particles. The fluidizing gas is an inert gas, preferably nitrogen, although it is stated that helium or argon could be used.

The existing fluidization aids have several drawbacks. Firstly, the existing methods are not always effective. They tend to be more effective for certain fine powders than for others. In general, if the inter-particle forces are too strong, the aids are simply insufficient to overcome them. In addition, none of the existing methods work well for extremely fine and cohesive powders, e.g. for most particles smallerthan approximately 10 µm in diameter. Secondly, many require extra components, such as vibrators, acoustic field generators, motors, etc., to generate the external aids. Thirdly, many require additional energy to provide the external aids, or they require addition of foreign particles which may contaminate the product.

No prior art appears to have recognized any utility for helium and/or hydrogen as a fluidization aid. Some prior art has discussed the use of helium and/or hydrogen as a potential fluidizing gas, but such prior art has at the same time contemplated the use of other fluidization aids, assuming such other aids to be necessary.

### DISCLOSURE OF INVENTION

In view of the above, it is an object of the invention to overcome some of the drawbacks of the existing fluidization aids, particularly with respect to fluidfzation of difficult-to-fluidize materials, and to improve the quality of fluidization of particles in general.

According to the invention there is provided a method of fluidizing powders, characterized by using a fluidizing gas including one or more gases other than gasses selected from the group consisting of hydrogen, deuterium, tritium and helium, and adding a low-molecular-weight gas to the fluidizing gas as a fluidization aid, where said low-molecular-weight gas is selected from the group consisting of hydrogen, deuterium, tritium and helium.

In the invention, it was recognized that the use of a low molecular-weight gas would act as a highly effective fluidization aid, by adding it to the fluidizing gas even in fairly low ratios, or in some cases by having it in much higher ratios, including up to 100%, where it in effect becomes the fluidizing gas as well as a fluidization aid. The low-molecular-weight gas could be, for example, hydrogen, deuterium, tritium or preferably, helium, or mixtures of these gases.

The inventors have found, contrary to the teachings of the prior art, that this produces very effective fluidization of even very fine particles, even without any other fluidization aids. Moreover, these gases are readily available and inexpensive to incorporate into pre-existing fluidization processes.

Even for particles other than very fine particles, improved fluidization is achieved in some cases, whether the low-molecular-weight gas is added into the fluidization stream or whether it is used as the sole fluidizing gas.

Although the precise mechanism is not well understood, the inventors believe that the low-molecular-weight gas acts as a fluidization aid by breaking up the interparticle forces of fine powders.

There is an important distinction between fluidizing gases and fluidization aids. In fluidized beds, the gas which is flowed through the bed of powder and is primarily intended to lift or expand the bed of powder, is the fluidizing gas. Helium in particular has been used as a fluidizing gas, selected for its inert nature or for its high thermal conductivity, but helium has not been previously recognized as a fluidization aid.

Also according to the invention, there is provided a method of aiding fluidization in fluidizing powders, comprising using a low-molecular-weight gas as a fluidizing gas, selected from the group consisting of hydrogen, deuterium, tritium and helium, wherein a low-molecular-weight gas selected from the same group is additionally added as and when required into regions where defluidization is occurring locally, to act as a fluidization aid in such regions.

Further features of the invention will be described or will become apparent in the course of the following detailed description.

### BRIEF DESCRIPTION OF DRAWINGS

In order that the invention may be more clearly understood, the preferred embodiment thereof will now be described in detail by way of example, with reference to the accompanying drawings, in which:
Fig. 1 is a graphical illustration of the bed expansion ratio (a measure of fluidization quality) when helium and hydrogen are used as the fluidizing gas, as compared to air, for glass beads of mean diameter of 4 µm;
Fig. 2 is a graphical illustration of the bed expansion ratio with the introduction of varying quantities of helium in the fluidizing gas for glass beads of mean diameter of 4 µm (R is the air to helium molar ratio);
Fig. 3 is a graphical illustration of the bed expansion ratio with the introduction of hydrogen in a very cohesive lactose powder; and,
Figs. 4 and 5 are graphical illustrations showing the favourable effect of hydrogen on the pressure drop for cohesive lactose powder, as compared to air.

### BEST MODE FOR CARRYING OUT THE INVENTION

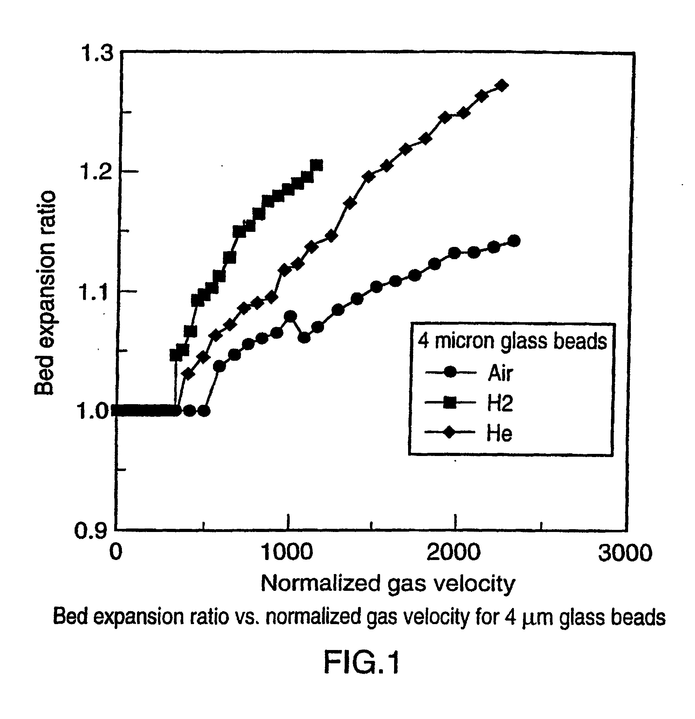

As illustrated in Figs. 1-5, the invention lies in the use of a low-molecular-weight gas such as helium or hydrogen (or deuterium or tritium) as a fluidization aid. The following description will focus on helium and/or hydrogen for clarity and simplicity, but it should be understood that deuterium and tritium are also contemplated.

The inventors have discovered that when hydrogen or helium or a combination of same, alone, together, or in combination with other gases are used as the fluidizing gas or as an addition to the fluidizing gas, the fluidization quality is improved. In particular, the fluidization of very fine powders is significantly improved.

For example, Fig. 1 illustrates that the bed expansion ratio (a measurement of fluidization effectiveness) is much higher when helium is used as the fluidizing gas, as compared to air alone, with respect to 4 µm glass beads. A given bed expansion ratio is achieved at much lower normalized gas velocities. Hydrogen is even better in terms of bed expansion ratio for a given normalized gas velocity. (The normalized gas velocity is the superficial gas velocity divided by the calculated minimum fluidization velocity.)

The same effect is shown in Table 1 below, for a variety of fine particles:

**Table 1:**

| Comparison of bed expansion ratios with helium and air as fluidizing gas (gas velocity = 1 cm/s) | | |
|---|---|---|
| Powders | Bed expansion ratio (with air) | Bed expansion ratio (with helium) |
| 1 µm carbon black | 4% | 56% |
| 4 µm glass beads | 1% | 12% |
| 12 µm lactose | 0% | 12% |
| 17 µm glass beads | 10% | 50% |
| 20 µm paint powder | 10% | 70% |

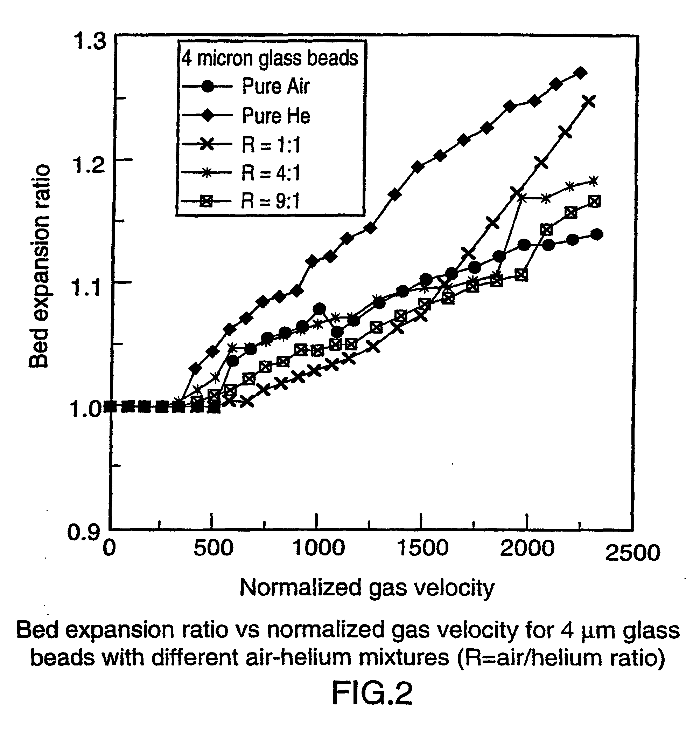

Similarly, Fig. 2 illustrates that fluidization of 4 µm glass beads can be improved with only a portion of helium in the fluidizing gas, particularly as normalized gas velocity increases.

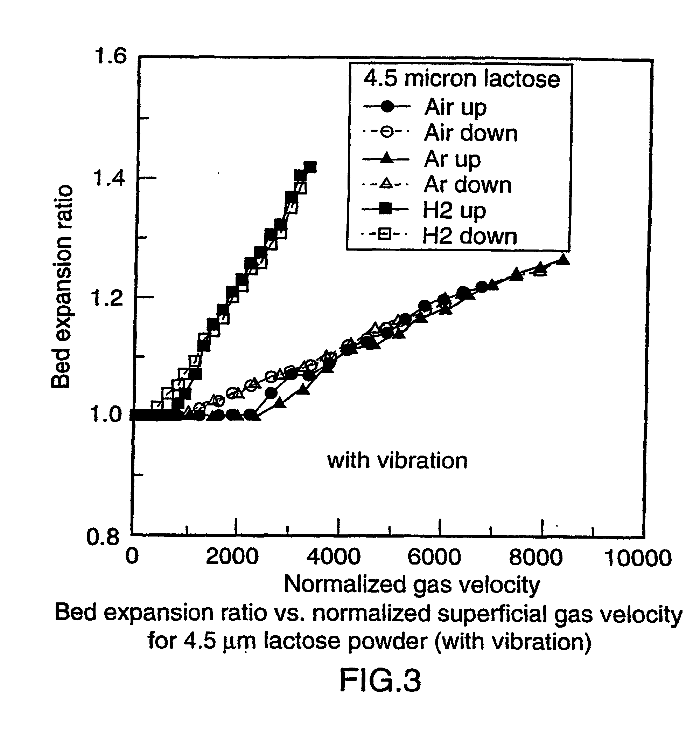

Fig. 3 illustrates the dramatic effect of hydrogen on the fluidization quality with respect to 4.5 µm lactose powder (which is very cohesive), with a constant vibration level, by comparing to air and argon. The "up" and down" references refer to increasing flow of the gas and then decreasing flow of the gas. In this case, the bed expansion ratio tracks quite consistently up and down.

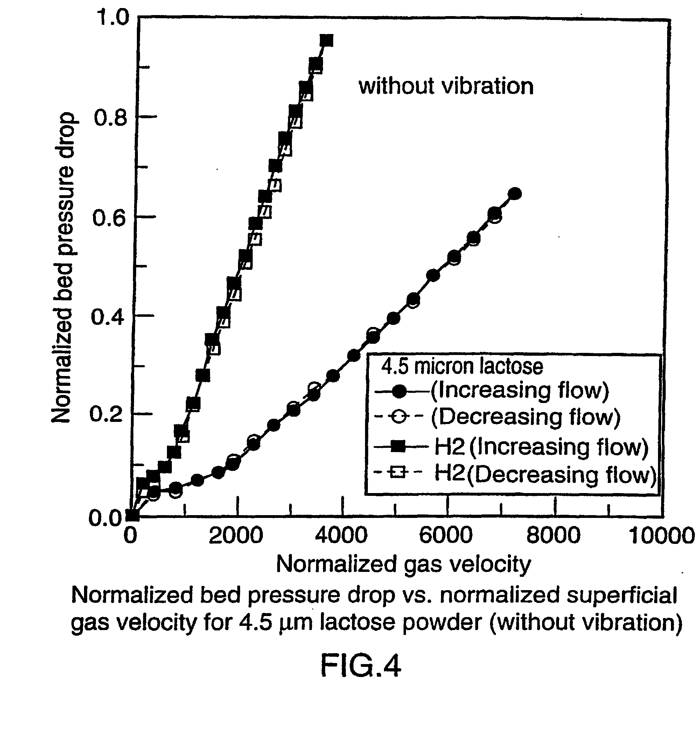

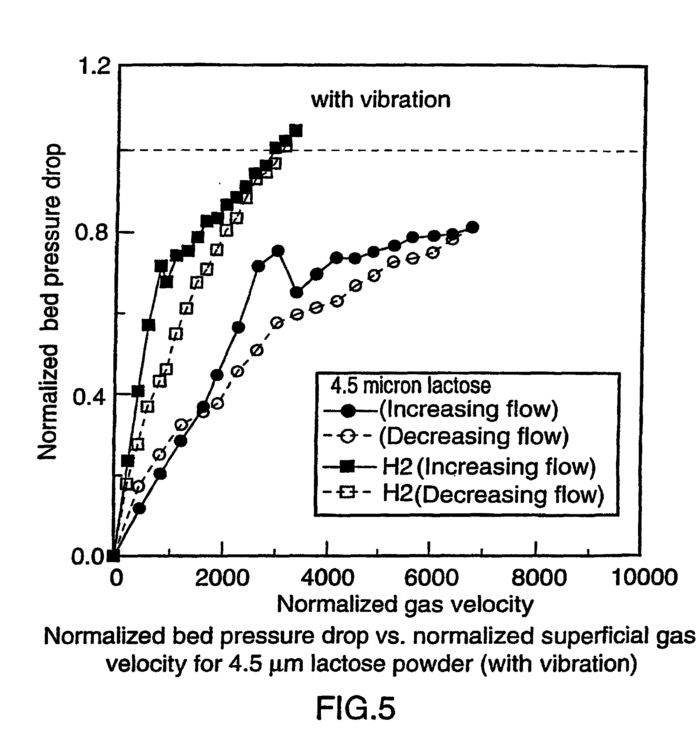

Figs. 4 and 5 illustrate that the use of hydrogen as a fluidization aid causes an increase in the normalized pressure drop across the fluidized bed, compared to air. An increased pressure drop is another indication of improved fluidization quality. It suggests that the weight-minus-buoyancy force required to support or suspend the particles is more nearly or completely provided by the drag exerted by the gas. Fig. 4 shows the case without the additional aid of vibration, and Fig. 5 shows the case with vibration as an auxiliary fluidization aid. Figs. 4 and 5 also show that the combination of two fluidization aids, for certain cases, can further increase the fluidization quality.

For processes where any gas species can be used, i.e. where it is not necessary for the gas to be inert, pure hydrogen or helium can be used to fluidize the fine particles, or one or both may be introduced as a constituent of the fluidizing gas.

For processes where a certain type of gas is involved in the chemical reaction(s), a portion of helium or hydrogen can be added to the gas stream to enhance the fluidization quality. However, hydrogen may not be possible for safety or unwanted reaction reasons. On the other hand, helium is an inert gas, and therefore its use will often be preferable.

The application of using low-molecular-weight gas species as fluidization aids to fine powder fluidization can be applied to many existing chemical reaction and powder handling processes where fine and/or cohesive particles are used to improve the fluidization quality, and hence to improve the conversion and/or selectivity, as well as particle handling. In addition, the availability of this new technology may well also allow some other processes currently not employing a fluidized bed to be processed in a fluidized bed, thereby making use of the significant advantages of fluidized beds over other types of gas-solids contactors, e.g. rotating drums, pneumatic conveying, etc. fluidized bed, thereby making use of the significant advantages of fluidized beds over other types of gas-solids contactors, e.g. rotating drums, pneumatic conveying, etc.

The inventors have also discovered that low-molecular-weight gas is useful in connection with fluidization of larger particles as well. Usually, ftuidization of regular powders does not require aids. However, there are cases where fluidization aids are very helpful or even essential. The inventors have shown that low-molecular-weight gas will also enhance the fluidization quality of regular powders, especially those located near the Group C and Group A boundary, although the beneficial effect becomes less as the powders get larger. (Group A particles are generally larger than Group C particles.)

This invention may be applied to many processes where the handling of fine particles are involved. There are numerous fine powder processes in various industries, including the chemical, materials, manufacturing, food, nuclear, pharmaceuticals, and ceramics industries.

It will be appreciated that the above description relates to specific examples of the Invention only. However, a number of variations on the invention will be obvious to those knowledgeable in the field.

For example, it should be appreciated that hydrogen and/or helium may be added as a component of the total gas initially in order to assist in fluidizing a particulate material, and then the hydrogen or helium may be turned off once self-sustaining fluidization has been achieved.

Alternatively, hydrogen or helium may be added into regions where defluidization is occurring locally to assist in effecting fluidization in those zones. That is, some local area in the fluidized bed may have bad fluidization quality. In that situation, the low-molecular-weight gas, or a gas containing low-molecular-weight gas, can be injected to those specific area to improve the local fluidization. After that, when the local fluidization improves, this "special" injection can be stopped.

In general, another alternative is that the addition of helium or hydrogen may be periodic or only carried out when some indicator of fluidization quality (e.g. pressure drop) indicates that defluidization is occurring or likely to occur, whether across the entire bed, or locally within the bed.

The above discussion has been with respect to helium and/or hydrogen. However, as stated previously, it is apparent to the inventors and should be apparent to those knowledgeable in the art that as an alternative to helium and/or hydrogen, deuterium or tritium may be used, as they too have favourably low molecular weights. Gases with higher molecular weights do not provide the benefits realized by the present invention.

### INDUSTRIAL APPLICABILITY

The invention provides improved fluidization of powders, especially fine powders.

## Claims

1. A method of fluidizing powders, **characterized by** using a fluidizing gas including one or more gases other than gasses selected from the group consisting of hydrogen, deuterium, tritium and helium, and adding a low-molecular-weight gas to the fluidizing gas as a fluidization aid, where said low-molecular-weight gas is selected from the group consisting of hydrogen, deuterium, tritium and helium.

2. The invention according to claim 1, wherein said powders include fine particles such as Geldart Group C and/or Geldart Group A particles.

3. The invention according to claim 1, wherein said powders consist essentially of fine particles such as Geldart Group C and/or Geldart Group A particles.

4. The invention according to any one of claims 1-3, where there are no fluidization aids other than said low-molecular-weight gas.

5. The invention according to any one of claims 1-4, wherein said low-molecular-weight gas is helium.

6. The invention according to any one of claims 1-4, wherein said low-molecular-weight gas is hydrogen.

7. The invention according to any one of claims 1-6, wherein said low-molecular-weight gas is additionally added as and when required into regions where defluidization is occurring locally, to assist in effecting fluidization in such regions.

8. The invention according to any one of claims 1-7, comprising a step of ceasing the introduction of the low-molecular-weight gas species into the fluidizing gas when self-sustaining fluidization of said powders is achieved.

9. The Invention according to claim 8, wherein the addition of the low-molecular-weight gas is recommenced when fluidization becomes poor or falls short of being self-sustaining.

10. A method of aiding fluidization in fluidizing powders, comprising using a low-molecular-weight gas as a fluidizing gas, selected from the group consisting of hydrogen, deuterium, tritium and helium, wherein a low-molecular-weight gas selected from the same group is additionally added as and when required into regions where defluidization is occurring locally, to act as a fluidization aid in such regions.

11. The invention according to claim 10, wherein said powders include fine particles such as Geldart Group C and/or Geldart Group A particles.

12. The invention according to claim 10, wherein said powders consist essentially of fine particles such as Geldart Group C and/or Geldart Group A particles.

13. The invention according to any one of claims 10-12, where there are no fluidization aids other than said low-molecular-weight gas.

14. The invention according to any one of claims 10-13, wherein said low-molecular-weight gas added as a fluidization aid is helium.

15. The invention according to any one of claims 10-13, wherein said low-molecular-weight gas added as a fluidization aid is hydrogen.

## Patentansprüche

1. Verfahren zum Fluidisieren von Pulvern, **gekennzeichnet durch** das Verwenden eines fluidisierenden Gases einschließlich eines Gases oder mehrerer Gase außer Gasen, die ausgewählt sind aus der Gruppe bestehend aus Wasserstoff, Deuterium, Tritium und Helium, und Zusetzen eines Gases mit einem geringen Molekulargewicht als Fluidisierungshilfe zu dem fluidisierenden Gas, wobei das Gas mit einem geringen Molekulargewicht ausgewählt ist aus der Gruppe bestehend aus Wasserstoff, Deuterium, Tritium und Helium.

2. Erfindung nach Anspruch 1, wobei zu den Pulvern feine Teilchen zählen, wie Teilchen der Geldart-Gruppe C und/oder der Geldart-Gruppe A.

3. Erfindung nach Anspruch 1, wobei die Pulver im wesentlichen aus feinen Teilchen bestehen, wie Teilchen der Geldart-Gruppe C und/oder der Geldart-Gruppe A.

4. Erfindung nach einem der Ansprüche 1-3, wobei keine anderen Fluidisierungshilfen vorliegen außer dem Gas mit einem geringen Molekulargewicht.

5. Erfindung nach einem der Ansprüche 1-4, wobei das Gas mit einem geringen Molekulargewicht Helium ist.

6. Erfindung nach einem der Ansprüche 1-4, wobei das Gas mit einem geringen Molekulargewicht Wasserstoff ist.

7. Erfindung nach einem der Anspüche 1-6, wobei das Gas mit einem geringen Molekulargewicht gegebenenfalls zusätzlich zu Gebieten zugesetzt wird, wo lokal eine Defluidisierung eintritt, um das Bewirken der Fluidisierung in derartigen Gebieten zu unterstützen.

8. Erfindung nach einem der Ansprüche 1-7, mit einem Schritt des Beendens des Einleitens der Gasspezies mit einem geringen Molekulargewicht in das fluidisierende Gas, wenn eine sich selbst erhaltende Fluidisierung der Pulver erreicht wird.

9. Erfindung nach Anspruch 8, wobei mit dem Zusatz des Gases mit einem geringen Molekulargewicht wieder begonnen wird, wenn die Fluidisierung schlecht wird oder sich nicht mehr selbst erhält.

10. Verfahren zur Unterstützung der Fluidisierung von Pulvern, mit der Verwendung eines Gases mit einem geringen Molekulargewicht als fluidisierendes Gas, ausgewählt aus der Gruppe bestehend aus Wasserstoff, Deuterium, Tritium und Helium, wobei ein aus der gleichen Gruppe ausgewähltes Gas mit einem geringen Molekulargewicht gegebenenfalls zusätzlich zu Gebieten zugesetzt wird, wo lokal eine Defluidisierung eintritt, um als Fluidisierungshilfe in derartigen Gebieten zu wirken.

11. Erfindung nach Anspruch 10, wobei zu den Pulvern feine Teilchen zählen, wie Teilchen der Geldart-Gruppe C und/oder der Geldart-Gruppe A.

12. Erfindung nach Anspruch 10, wobei die Pulver im wesentlichen aus feinen Teilchen bestehen, wie Teilchen der Geldart-Gruppe C und/oder der Geldart-Gruppe A.

13. Erfindung nach einem der Ansprüche 10-12, wobei keine anderen Fluidisierungshilfen vorliegen außer dem Gas mit einem geringen Molekulargewicht.

14. Erfindung nach einem der Ansprüche 10-13, wobei das als eine Fluidisierungshilfe zugesetzte Gas mit einem geringen Molekulargewicht Helium ist.

15. Erfindung nach einem der Ansprüche 10-13, wobei das als eine Fluidisierungshilfe zugesetzte Gas mit einem geringen Molekulargewicht Wasserstoff ist.

## Revendications

1. Procédé de fluidisation de poudres, **caractérisé par** l'utilisation de gaz de fluidisation incluant un ou plusieurs gaz autres que les gaz sélectionnés à partir du groupe consistant en l'hydrogène, le deutérium, le tritium, et l'hélium, et par l'ajout d'un gaz de poids moléculaire faible au gaz de fluidisation comme aide à la fluidisation, dans lequel ledit gaz de poids moléculaire faible est sélectionné à partir du groupe consistant en l'hydrogène, le deutérium, le tritium et l'hélium.

2. Invention selon la revendication 1, dans laquelle lesdites poudres comprennent des particules fines telles que les particules du groupe C de Geldart et/ou celles du groupe A de Geldart.

3. Invention selon la revendication 1, dans laquelle lesdites poudres consistent essentiellement en de fines particules telles que les particules du groupe C de Geldart et/ou celles du groupe A de Geldart.

4. Invention selon l'une quelconque des revendications 1 à 3, dans laquelle il n'y a pas d'aide à la fluidisation autre que ledit gaz de poids moléculaire faible.

5. Invention selon l'une quelconque des revendications 1 à 4, dans laquelle ledit gaz de poids moléculaire faible est de l'hélium.

6. Invention selon l'une quelconque des revendications 1 à 4, dans laquelle ledit gaz de poids moléculaire faible est de l'hydrogène.

7. Invention selon l'une quelconque des revendications 1 à 6, dans laquelle ledit gaz de poids moléculaire faible est en outre ajouté comme nécessaire et au moment nécessaire dans les zones où la défluidisation se produit localement, pour aider à l'obtention de la fluidisation dans ces zones.

8. Invention selon l'une quelconque des revendications 1 à 7, comprenant une étape d'arrêt de l'introduction des espèces de gaz de poids moléculaire faible dans un gaz de fluidisation lorsqu'une fluidisation autonome desdites poudres est obtenue.

9. Invention selon la revendication 8, dans laquelle l'ajout du gaz de poids moléculaire faible est recommandé lorsque la fluidisation devient faible ou tombe à court en autonomie.

10. Procédé d'aide à la fluidisation dans des poudres de fluidisation, comprenant l'utilisation d'un gaz de poids moléculaire faible comme gaz de fluidisation, sélectionné à partir du groupe consistant en l'hydrogène, le deutérium, le tritium, et l'hélium, dans lequel un gaz de poids moléculaire faible sélectionné à partir du même groupe est en outre ajouté comme nécessaire et au moment nécessaire dans des zones où la défluidisation se produit localement, pour agir comme une aide à la fluidisation dans de telles zones.

11. Invention selon la revendication 10, dans laquelle lesdites poudres comprennent des fines particules telles que des particules du groupe C de Geldart et/ou du groupe A de Geldart.

12. Invention selon la revendication 10, dans laquelle lesdites poudres consistent essentiellement en de fines particules telles que des particules du groupe C de Geldart et/ou du groupe A de Geldart.

13. Invention selon l'une quelconque des revendications 10 à 12, dans laquelle il n'y a pas d'aide de fluidisation autre que ledit gaz de poids moléculaire faible.

14. Invention selon l'une quelconque des revendications 10 à 13, dans laquelle ledit gaz de poids moléculaire faible ajouté comme aide à la fluidisation est de l'hélium.

15. Invention selon l'une quelconque des revendications 10 à 13, dans laquelle ledit gaz de poids moléculaire faible ajouté comme aide à la fluidisation est de l'hydrogène.
